Europäisches Patentamt

European Patent Office

Office européen des brevets

(11) Publication number: **0 480 362 A2**

# EUROPEAN PATENT APPLICATION

(21) Application number: **91117110.6**

(22) Date of filing: **08.10.91**

(51) Int. Cl.5: **C09D 103/02**, B41M 1/26, B05D 3/10

(30) Priority: **11.10.90 JP 274224/90**
**18.04.91 JP 115250/91**

(43) Date of publication of application:
**15.04.92 Bulletin 92/16**

(84) Designated Contracting States:
**DE FR GB IT**

(71) Applicant: **OSAKA PRINTING INK MFG. CO., LTD.**
**8-31, Kaminishi 2-chome, Hirano-ku**
**Osaka-shi, Osaka(JP)**

(72) Inventor: **Otsuru, Isao**
**9-11, Ogata 2-chome**
**Kashihara-shi, Osaka(JP)**
Inventor: **Onishi, Takashi**
**7-9, Wakakusa-cho**
**Higashiosaka-shi, Osaka(JP)**
Inventor: **Yoshida, Toshiyuki**
**Sanko Mansion 107, 1-10-7, Sosha**
**Fujiidera-shi, Osaka(JP)**
Inventor: **Otsuka, Hidetsugu**
**36, Nimomata 3-chome**
**Yao-shi, Osaka(JP)**

(74) Representative: **Türk, Gille, Hrabal**
**Brucknerstrasse 20**
**W-4000 Düsseldorf 13(DE)**

(54) **Coating agent for non water-absorbent materials for printing by water based or water soluble printing ink.**

(57) Since plastic film, metallic foil, synthetic paper, non-woven fabric, and products made of these materials are not absorbent of water, ink printed onto the materials does not dry well. There is a corona treatment for these materials to improve the ink drying and adhesivity. But the effect of the corona treatment does not last for hours.

The invention purposes quick drying, prevention of sticky problem, scratching-proof, adhesivity of water based glue for the materials by means of coating agent to be coated onto the materials before printing with water based or water soluble printing, or before writing with water based ink pen, or before stamping with water based ink stamp.

Coating Agent containing starch or combined starch by 1 % to 20 % by weight that enables printing onto non water-absorbent materials such as plastic film, plastic molding products, metallic alminium foil, and so on with water based or water soluble printing ink, or writing with water based ink pen, or stamping with water based ink stamp.

## BACKGROUND OF THE INVENTION

Field of the Invention

This invention relates to a surface coating agent that enables printing, writing, or stamping, onto non water-absorbent or water repellent materials such as plastic film, plastic molding products, metallic alminium foil and so on with water based or water soluble printing ink, water based ink pen, water based ink stamp and also that enables pasting stamps onto the materials with water based glue firmly and quickly by means of coating the materials with the coating agent.

Prior Art

Formerly, it was impossible to print, to write onto non water-absorbent materials with water based or water soluble flexo printing ink, gravure printing ink, water based ink pen, or to paste stamps onto envelopes made of the materials with water based glue, because of drying retard, poor adhesivity.

To solve the problems, two inventions were applied for patent by the inventors. They were Patent Application No, 61-220271 (Publication No. 63-75079) and Patent Application No. 62-176886 (Publication No. 64-20186). The inventions have been effective very much for printing onto the materials.

But they still have some points to improve, The coating agent by the former absorbs water if it gets rain, and becomes sticky on the surface of the coated materials, finaly impairs smoothness of the printed surface.

The coating agent by the latter containing high water-absorption polymer creates a good adhesivity when water-alcohol type water soluble printing ink, called water soluble flexo printing ink and gravure printing ink is used, But the use is limited within a special condition, since a problem so called slime occurs on printing onto the materials and handling of the printed matters.

There are some points to improve drying retard, poor adhesivity of ink on plastic film such as oriented polypropylene (OPP), cast polypropylene (CPP), polyethylene (PE), polyethylene terephtalate (PET), and aluminium foil, synthetic paper, non-woven fabric, or envelopes, film bags.

Nowadays water soluble ink is used for plastic film, The ink does not fix on the plastic film unless the plastic film is maintained with more than 40 dynes after treatment by corona treatment and the like,

In case of in-line printing (film-making and printing are simultaneously made), it is easy to maintain the traetment of plastic film with more than 40 dynes. But in case that it passes hours after plastic film is made, it is very difficult to maintain treatment of the plastic film with more than 40 dynes. Therefore it was too difficult to obtain quality printed matters in drying, adhesivity by off-line printing with water based or water soluble printing ink.

## SUMMARY OF THE INVENTION

Considering the above said conditions, the inventors developed and offered the afore said coating agent and as a result of repeated research, they have succeeded in the development of a coating agent satisfactory for quick dry, prevention of sticky problem, scratching-proof, adhesivity of water based glue on printing, writing, stamping onto non water-absorbent materials with water based or water soluble printing ink.

## DETAILED DESCRIPTION OF THE INVENTION

The inventors have succeeded in making the positive and quick printing, writing, stamping onto non water-absorbent materials with water based or water soluble printing ink, water based ink pen, water stamp ink, and in making the positive and quick pasting of stamps with water based glue, by means of coating the materials with the coating agent containing micro powder from potato starch, sweet potato starch, rice starch, corn starch, wheat starch, tapioca starch, or combined starch (Selex manufactured by Nichiden Kagaku) by 1 % to 20 % by weight.

The followings are printing test results in the use of the invented coating agent for plastic film with water based or water soluble printing ink. The example of operation 1 to 4 are under the invention, and the example of comparison 1 to 3 are under conventional formula, and the example of operation 5 to 12 are under the invention.

| Example of Operation 1 | by weight % |
|---|---|
| Urethan resin (Sunpren IB-450 by Sanyo Kasei) | 40.0 |
| Titanium oxide (R-830 by Ishihara Sangyo) | 30.0 |
| Silica (P-801 by Mizusawa Kagaku) | 1.0 |
| Corn starch (Matsui Kagaku Toluene/MEK 40 % dispersion) | 15.0 |
| Methyl Ethyl Ketone | 4.0 |
| Toluene | 5.0 |
| Isopropyl Alcohol | 5.0 |

| Example of Operation 2 | by weight % |
|---|---|
| Urethan resin (Sunpren IB-450 by Sanyo Kasei) | 40.0 |
| Titanium oxide (R-830 by Ishihara Sangyo) | 10.0 |
| Silica (P-801 by Mizusawa Kagaku) | 5.0 |
| Rice starch (by Shimada Kagaku) | 8.0 |
| Methyl Ethyl Ketone | 22.0 |
| Toluene | 10.0 |
| Isopropyl Alcohol | 5.0 |

| Example of Operation 3 | by weight % |
|---|---|
| Urethan resin (Sunpren IB-450 by Sanyo Kasei) | 35.0 |
| Vinyl Chloride/polyvinyl acetate copolymerization (VACII by Union Carbite) | 5.0 |
| Silica (P-801 by Mizusawa Kagaku) | 5.0 |
| Potato starch (By Matsutani Kagaku) | 5.0 |
| Methyl Ethyl Ketone | 35.0 |
| Toluene | 10.0 |
| Isopropyl Alcohol | 5.0 |

| Example of Operation 4 | by weight % |
|---|---|
| Chlorinated polypropylene (Super Chron 803MW by Sanyo Kokusaku Pulp) | 20.0 |
| Chlorinated polypropylene (Super Chron B by Sanyo Kokusaku Pulp) | 40.0 |
| Titanium oxide (R-830 by Ishihara Sangyo) | 30.0 |
| Silica (P-801 by Mizusawa Kagaku) | 1.0 |
| Wax (20 % Dispersion of Eporene N by Eastman) | 2.0 |
| Tapioca starch (40 % Dispersion by Matsutani Kagaku) | 7.0 |

| Example of comparison 1 | by weight % |
|---|---|
| Urethan resin (Sunpren IB-450 by Sanyo Kasei) | 40.0 |
| Titanium oxide (R-830 by Ishihara Sangyo) | 30.0 |
| Silica (P-801 by Mizusawa Kagaku) | 6.0 |
| Wax (20 % Dispersion of Eporene N by Eastman) | 5.0 |
| Methyl Ethyl Ketone | 4.0 |
| Toluene | 10.0 |
| Isopropyl Alcohol | 5.0 |

| Example of comparison 2 | by weight % |
|---|---|
| Urethan resin (Sunpren IB-450 by Sanyo Kasei) | 40.0 |
| Titanium oxide (R-830 by Ishihara Sangyo) | 30.0 |
| Silica (P-801 by Mizusawa Kagaku) | 2.0 |
| Wax (20 % Dispersion of Eporene N by Eastman) | 5.0 |
| High water-absorbent resin (Sunwet by Sanyo Kasei) | 8.0 |
| Methyl Ethyl Ketone | 5.0 |
| Toluene | 5.0 |
| Isopropyl Alcohol | 5.0 |

| Example of comparison 3 | by weight % |
|---|---|
| Chlorinated polypropylene (Super Chron 803MW by Sanyo Kokusaku Pulp) | 20.0 |
| Chlorinated polypropylene (Super Chron B by Sanyo Kokusaku Pulp) | 40.0 |
| Titanium oxide (R-830 by Ishihara Sangyo) | 20.0 |
| Silica (P-801 by Mizusawa Kagaku) | 5.0 |
| Wax (20 % Dispersion of Eporene N by Eastman) | 5.0 |
| Methyl Ethyl Ketone | 5.0 |
| Toluene | 5.0 |

Table-1 shows judgements on the tested items for the coating agent in the example of operation by the invention and the example of comparison, which were printed onto treated surface OPP twice by gravure solid plate of 150 lines X 35 micron depth.

As an ink vehicle for the coating agent, polyamide resin, epoxy resin, vinyl chloride, vinyl acetate resin, polyester resin, petroleum resin, chlorinated rubber, cyclorubber are tested respectively according to the example of operation 1 to 4. The results were satisfactory.

Test Items

    (1) Adhesivity :                    Exfoliation by cellophane tape (15 mm width)
    (2) Wrinkling :                      Wrinkling by hands 10 times
    (3) Scratch :                         By nail
    (4) Writing :                          (a) pencil, (b) ball point pen, (c) water based ink pen
    (5) Drying :                          Drying of stamp
    (6) Pasting stamps :               Exfoliation after stamp is pasted
    (7) Printability by Offset printing :    Overprinting with offset printing ink
    (8) Smooth :                        Smooth of printed surface to printed surface

The followings are the examples of operation by the combination of vehicle and starch.

| Example of operation 5 | by weight % |
|---|---|
| Urethan resin (Sunpren IB-450 by Sanyo Kasei) | 40.0 |
| Corn starch (By Matsuya Kagaku) | 5.0 |
| Methyl Ethyl Ketone | 25.0 |
| Toluene | 20.0 |
| Isopropyl Alcohol | 10.0 |

The inventors mixed 100 parts the above mixture with 5 parts isocianate and printed onto surface treated PE, PP, PET film with the mixture as a coating agent. They found that the printed (coated) surface was good in adhesivity and drying for water based or water soluble printing ink.

4

| Example of operation 6 | by weight % |
|---|---|
| Urethan resin (Sunpren IB-450 by Sanyo Kasei) | 40.0 |
| Rice starch (By Shimada Kagaku) | 5.0 |
| Methyl Ethyl Ketone | 25.0 |
| Toluene | 20.0 |
| Isopropyl Alcohol | 10.0 |

The inventors tested the above said mixture in the same way as the example of operation 5. They found that the printed (coated) surface was good in adhesivity and drying for water based or water soluble printing ink.

| Example of operation 7 | by weight % |
|---|---|
| Chlorinated polypropylene (Solid part 30%, Superchron 803M by Sanyo Kokusaku Pulp) | 50.0 |
| Potato starch (By Matsutani Kagaku) | 5.0 |
| Toluene | 35.0 |
| Methyl Ethyl Ketone | 10.0 |

The inventors mixed and dispersed the above said materials, coated surface untreated PP film with the mixture. They found that the coated surface was good in adhesivity and drying for water based or water soluble printing ink.

| Example of operation 8 | by weight % |
|---|---|
| Polyvinyl chloride (Denkavinyl 1000CK by Denki Kagaku Kogyo) | 20.0 |
| Amino resin (Melan 18 by Hitachi Kasei) | 5.0 |
| Rice starch (By Shimada Kagaku) | 5.0 |
| Toluene | 25.0 |
| Methyl Ethyl Ketone | 45.0 |

The inventors mixed and dispersed, and coated alminium sheet with the mixture as an coating agent. After that, they heated the coated alminium sheet at 180 °C for 10 seconds and found that it was good in adhesivity and drying for water based or water soluble printing ink.

| Example of operation 9 | by weight % |
|---|---|
| Urethan resin (Sunpren IB-450 by Sanyo Kasei) | 35.0 |
| Silica (P-80 by Mizusawa Kagaku) | 5.0 |
| Titanium oxide (CR-50 by Ishihara Sangyo) | 10.0 |
| Rice starch | 5.0 |
| Methyl Ethyl Ketone | 30.0 |
| Toluene | 10.0 |
| Isopropyl Alcohol | 5.0 |

The inventors added Isocyanate (Coronate III by Nippon Polyurethan Co.) into the above mixture and coated surface treated PE film with the mixture. Then they printed onto the coated PE film with water based or water soluble printing ink and found both its adhesivity and drying good. The film could be used as substitution of milky PE film.

| Example of operation 10 | by weight % |
|---|---|
| Polyamide resin (Sunmaid 550D by Sanyo Kasei) | 15.0 |
| Cellulose nitrate (By Daicel Kagaku Kogyo) | 10.0 |
| Rice starch (By Shimada Kagaku) | 10.0 |
| Toluene | 10.0 |
| Isopropyl Alcohol | 40.0 |
| Ethyl acetate | 10.0 |
| Methanol | 5.0 |

The inventors coated surface treated PP film with the above mixture and printed onto the coated PP film with water based or water soluble printing ink, and found both its adhesivity and drying good.

| Example of operation 11 | by weight % |
|---|---|
| Vinyl chloride (Denkavinyl 1000GKT by Denki Kagaku kogyo) | 15.0 |
| Acryl resin (Solid part 30%, Luckskin No. 6 by Seiko Kagaku) | 10.0 |
| Rice starch (By Shimada Kagaku) | 10.0 |
| Methyl Ethyl Ketone | 30.0 |
| Toluene | 30.0 |
| Ethyl acetate | 5.0 |

The inventors coated vinyl chloride film with the above mixture and printed onto the coated vinyl chloride film with water based or water soluble printing ink, and found both its adhesivity and drying good.

| Example of operation 12 | by weight % |
|---|---|
| Urethan resin (Solid part 30%, Sunpren IB114B by Sanyo Kasei) | 60.0 |
| Silica | 2.0 |
| Combined starch (Selex by Nichiden Kagaku) | 5.0 |
| Methyl Ethyl Ketone | 20.0 |
| Toluene | 8.0 |
| Isopropyl alcohol | 5.0 |

The inventors treated the above mixture in the same way as the example of operation 8, and coated PE, PP, PET film with the mixture and printed onto the coated film with water based or water soluble printing ink. They found both its adhesivity and drying very good.

The inventors tested epoxy resin, vinyl acetate resin, polyester resin, petroleum resin, chlorinated rubber, cyclorubber besides the above said materials as vehicle for coating agent. They coated suitable films with the mixture respectively and printed onto the coated films with water based or water soluble printing ink. They found both its adhesivity and drying good.

As shown in the example of operation, the combination of a material as vehicle for coating agent and starch to be used does not relate to the adhesivity against ink on films. Adhesivity can be obtained by the combination of a material to be printed and a vehicle material for coating agent.

The invented coating agent enables water based or water soluble ink to adhere firmly and to dry quickly onto non water-absorbent materials or water-repellent materials such as plastic film, plastic molding products, alminium foil, synthetic paper, non-woven fabric, envelopes, film bags by coating the materials with the invented coating agent when the materials are printed with the ink.

The invented coating agent also enables writing ink and stamping ink to fix firmly and to dry quickly on the materials. Besides the invented coating agent enables water based glue to fix firmly and quickly on the materials.

6

TABLE - 1

| Test items | Examples of operation | | | | Comparisons | | |
|---|---|---|---|---|---|---|---|
| | 1 | 2 | 3 | 4 | 1 | 2 | 3 |
| (1) | ○ | ○ | ○ | ○ | ○ | ○ | ○ |
| (2) | ○ | ○ | ○ | ○ | ○ | ○ | ○ |
| (3) | ○ | ○ | ○ | ○ | X | X | X |
| (4) a | ○ | ○ | ○ | ○ | ○ | ○ | ○ |
| b | ○ | ○ | ○ | ○ | ○ | ○ | ○ |
| c | ○ | ○ | ○ | ○ | X | ○ | X |
| (5) | ○ | ○ | ○ | ○ | X | ○ | X |
| (6) | ○ | ○ | ○ | ○ | △ | ○ | △ |
| (7) | ○ | ○ | ○ | ○ | ○ | X | ○ |
| (8) | ○ | ○ | ○ | ○ | ○ | X | ○ |

## Claims

1. The coating agent containing starch or combined starch by 1 % to 20 % by weight dispersed that enables printing, writing, or stamping onto non water-absorbent materials such as plastic film, plastic molding products, metallic alminium foil and so on with water based or water soluble printing ink, water based ink pen, water based ink stamp by means of coating the materials with the coating agent.